# EUROPÄISCHE PATENTSCHRIFT

(11) **EP 2 527 706 B1**
(45) Veröffentlichungstag und Bekanntmachung des Hinweises auf die Patenterteilung: **10.09.2014**
(21) Anmeldenummer: 12004026.6
(22) Anmeldetag: 23.05.2012
(51) Int. Cl.: F16L 55/10, F16K 5/06, F16K 27/06, B65D 47/06

(54) **Vorrichtung zum Absperren oder Freigeben eines Schlauchausflussendes**
Device for blocking or opening a hose outlet end
Dispositif de verrouillage ou de libération d'une extrémité de décharge d'un tuyau

(30) Priorität: 25.05.2011 DE 202011101095 U
(43) Veröffentlichungstag der Anmeldung: 28.11.2012
(73) Patentinhaber: TRUPLAST KUNSTSTOFFTECHNIK GMBH, D-35428 Langgöns (DE)
(72) Erfinder: Linhart, Georg Peter, 61206 Wöllstadt (DE); Linhart, Christian, Dr.-Ing., 61206 Wöllstadt (DE)
(74) Vertreter: Oppermann, Ewald

(56) Entgegenhaltungen:
- DE-B3-102007 011 210
- GB-A- 2 147 688
- US-A- 4 946 079
- US-A1- 2010 207 046

## Beschreibung

### TECHNISCHES GEBIET

Die Erfindung betrifft eine Vorrichtung zum wahlweisen Absperren oder Freigeben des Ausflussendes eines Schlauchs, insbesondere des Abwasserschlauchs einer Bodenreinigungsmaschine.

### STAND DER TECHNIK

Nach dem gegenwärtigen Stand der Technik wird zum Absperren und Freigeben eines abwasserführenden Schlauchs an einer Bodenreinigungsmaschine eine sogenannte Abquetschmuffe aus einem weichen Material, beispielsweise aus Polyvinylchlorid, am Schlauchende verwendet. Die Abquetschmuffe ermöglicht es dem Benutzer das Schlauchende durch Abquetschen oder Abknicken der Abquetschmuffe solange zu verschließen, bis er das Schlauchende über einem Abflussdeckel positioniert hat. Dann kann die Abknickung gelockert werden und das Abwasser kann über den Schlauch abfließen.

Das Absperren des Ausflussendes eines Schlauchs mittels einer derartigen an das Schlauchende angeschlossenen Abquetschmuffe erfordert vom Benutzer einige Geschicklichkeit und auch Kraftaufwand, insbesondere wenn die damit abzusperrende Flüssigkeit unter Druck steht, um ein vorzeitiges Austreten von Flüssigkeit aus dem Schlauchende zu verhindern.

Für das Absperren oder Freigeben von Flüssigkeitsströmen in bzw. aus Schläuchen und Rohren sind schon für andere Anwendungen unterschiedliche Kugelhahnkonstruktionen bekannt geworden (DE 10 2007 011 210 B3, GB 2 147 688 A, US 2010/0207046 A1, US 4 946 079 A).

### AUFGABENSTELLUNG

Der Erfindung liegt die Aufgabe zugrunde, eine Vorrichtung für die Eingangs angegebene Verwendung bereitzustellen, die auch für weniger geschickte Benutzer einfach und zuverlässig in der Handhabung ist und eine gezielte und kontrollierte Ableitung des Abwassers aus dem Schlauch ermöglicht.

### DARSTELLUNG DER ERFINDUNG

Diese Aufgabe wird erfindungsgemäß durch die im Anspruch 1 angegebene Vorrichtung gelöst, die ein zweiteiliges Gehäuse besitzt, dessen schlauchseitiges Gehäuseteil für den Anschluss des Schlauchs ausgebildet und dessen äußeres Gehäuseteil mit einer Auslauftülle versehen ist, wobei innerhalb des Gehäuses ein um 90° drehbares kugelförmiges Verschlussstück angeordnet ist, das mit einem geradlinigen mit dem Schlauchanschluss und der Auslauftülle zur Freigabe des Ausflussendes ausfluchtbaren Durchgangskanal versehen ist und dem in beiden Gehäuseteilen vorgesehene konkav gewölbte Kugelabschnittsflächen komplementär zugeordnet sind, wobei im schlauchseitigen Gehäuseteil ein dem Verschlussstück anliegender Dichtring vorgesehen ist, dem das Verschlussstück mittels eines das äußere Gehäuseteil umgebenden und mit dem schlauchseitigen Gehäuseteil verriegelbaren Klemmrings abdichtend und die Position des Verschlussstücks fixierend anpressbar ist.

Vorteilhafte und/oder zweckmäßige weitere Ausgestaltungen der erfindungsgemäßen Vorrichtung gehen aus den Unteransprüchen hervor und werden nachfolgend ebenfalls näher beschrieben.

Die erfindungsgemäße Vorrichtung besitzt einen integrierten Kugelhahn, der einfach und funktionssicher zu handhaben ist. Hierzu hat der Benutzer, wenn sich die Auslauftülle über einem Abfluss befindet, lediglich den Klemmring, der das kugelförmige Verschlussstück fixiert, durch eine geringfügige Drehung zu lösen. Danach kann der Benutzer das Verschlussstück drehen bis das Wasser aus dem Schlauch austreten kann. Wenn das Wasser ausgelaufen ist wird das Verschlussstück wieder um 90° zurückgedreht und mittels des Klemmrings abdichtend an den Dichtring angepresst.

Vorteilhaft ist der Dichtring ein O-Ring, wie im Anspruch 2 angegeben ist, der in eine zum Verschlussstück offene Ringnut des schlauchseitigen Gehäuseteils eingelegt ist, die konzentrisch mit der Mittelachse des Gehäuses angeordnet ist.

In Weiterführung des Erfindungsgedankens ist entsprechend Anspruch 3 konzentrisch mit der Drehachse des Verschlussstücks ein Lagerzapfen an dem Verschlussstück befestigt, der durch eine Lagerbohrung des schlauchseitigen Gehäuseteils nach außen geführt und an dessem äußeren Ende ein Bedienungsgriff befestigt ist, der auch nach Art einer Flügelmutter zweiflügelig ausgebildet sein kann. Auf diese Weise lässt sich das Verschlussstück leicht bis in seine beiden Endlagen seines Drehwinkels von 90° verstellen, wenn der Klemmring gelöst ist.

Hierfür ist gemäß Anspruch 4 vorgesehen, dass konzentrisch mit der Drehachse des Verschlussstücks und quer dazu eine Ausnehmung am Außenumfang des Verschlussstücks vorgesehen ist, die durch zwei den Drehwinkel des Verschlussstücks bestimmende Anschlagflächen begrenzt ist, denen ein an dem äußeren Gehäuseteil angebrachter Anschlagvorsprung zugeordnet ist. Auf diese Weise sind die Anschlagflächen und der Anschlagvorsprung innerhalb des Gehäuses untergebracht.

Die Ausbildung des Klemmrings und der mit ihm zusammenwirkenden Elemente geht in einer vorteilhaften Ausführungsform aus Anspruch 5 hervor. Danach übergreift der Klemmring das schlauchseitige Gehäuseteil mit einem Rand, an dessen Innenumfangsfläche mehrere am Umfang gleichmäßig verteilte nach innen vorstehende Verriegelungsvorsprünge vorgesehen sind, denen am Außenumfang des schlauchseitigen Gehäuseteils eingeformte Verriegelungsausnehmungen nach Art einer Bajonettverriegelungsanordnung komplementär zugeordnet sind. Die Verriegelungsausnehmungen können auch an der Innenumfangsfläche des Klemmrings eingeformt sein, während die Verriegelungsvorsprünge am Außenumfang des schlauchseitigen Gehäuseteils vorgesehen sind.

Die Bajonettverriegelungsanordnung ist vorteilhaft entsprechend Anspruch 6 ausgebildet. Hierbei sind die Verriegelungsausnehmungen jeweils aus einem parallel zur Mittelachse des Gehäuses angeordneten äußeren Nutabschnitt und einem daran anschließenden und quer dazu angeordneten inneren Nutabschnitt gebildet, wobei der Nutgrund des äußeren Nutabschnitts von außen nach innen ansteigend ist und mit einer Raststufe für den zugeordneten Verriegelungsvorsprung endet. Wenn die Verriegelungsvorsprünge in die äußeren Nutabschnitte der Verriegelungsausnehmungen eingeführt werden und der Klemmring in axialer Richtung auf das schlauchseitige Gehäuseteil aufgeschoben wird, bis die Verriegelungsvorsprünge hinter die Raststufen der Nutabschnitte gelangen, kann der Klemmring nicht mehr ohne weiteres von dem Gehäuse abfallen. Wird er nunmehr in Schließrichtung gedreht bewegen sich seine Verriegelungsvorsprünge innerhalb der inneren Nutabschnitte, die, wie bei Bajonettverriegelungsanordnungen üblich, in Drehrichtung axial etwas ansteigen, wodurch das Verschlussstück mittels des äußeren Gehäuseteils und dessen konkav gewölbte Kugelabschnittsfläche an den Dichtring angepresst wird.

Zweckmäßig sind vier Verriegelungsvorsprünge und dementsprechend vier Verriegelungsausnehmungen entsprechend Anspruch 7 vorgesehen.

In einer bevorzugten Ausführungsform ist der Schlauch dreh- und lösbar mit dem schlauchseitigen Gehäuseteil verbunden, wie das im Anspruch 8 angegeben ist. Hierbei kann entsprechend Anspruch 9 das Schlauchende in eine Endhülse eingeklebt sein, die abgedichtet und drehbar in eine Zylinderausnehmung des schlauchseitigen Gehäuseteils eingesetzt und darin durch einen Sperrring gehalten ist, der mit dem schlauchseitigen Gehäuseteil lösbar verrastet ist.

Am Außenumfang des schlauchseitigen Gehäuseteils kann zweckmäßig entsprechend Anspruch 10 eine Umfangsnut vorgesehen sein, in welche ein Einhängeelement dreh- und lösbar eingerastet ist. Auf diese Weise kann die erfindungsgemäße Vorrichtung mittels des Einhängeelements zusammen mit dem zugehörigen Schlauch an der Bodenreinigungsmaschine abnehmbar angebracht sein.

### KURZE BESCHREIBUNG DER ZEICHNUNGEN

Weitere Einzelheiten der Erfindung werden nachfolgend anhand der beigefügten Zeichnungen, in denen bevorzugt Ausführungsbeispiele dargestellt sind, näher erläutert. Darin zeigt:
- Fig. 1: die Draufsicht auf die Betätigungsseite der Vorrichtung bei geöffnetem Kugelhahn,
- Fig. 2: den Längsschnitt durch die Vorrichtung entsprechend der Schnittverlaufslinie II - II in Fig. 1,
- Fig. 3: die stirnseitige Ansicht der Auslaufseite der Vorrichtung bei geöffnetem Kugelhahn,
- Fig. 4: die Draufsicht entsprechend Fig. 1, jedoch bei geschlossenem Kugelhahn,
- Fig. 5: den Längsschnitt durch die Vorrichtung entsprechend der Schnittverlaufslinie V - V in Fig. 4,
- Fig. 6: die stirnseitige Ansicht der Auslaufseite der Vorrichtung bei geschlossenem Kugelhahn,
- Fig. 7: eine Seitenansicht der Vorrichtung bei geschlossenem Kugelhahn, jedoch bei abgenommenem Klemmring,
- Fig. 8: den Längsschnitt durch die Vorrichtung entsprechend der Schnittverlaufslinie VIII - VIII in Fig. 7,
- Fig. 9: den Klemmring in Blickrichtung auf seine Innenseite,
- Fig. 10: den Schnitt durch den Klemmring entsprechend der Schnittverlaufslinie X - X in Fig. 9,
- Fig. 11: eine Seitenansicht des Klemmrings,
- Fig. 12: den Schnitt durch die Vorrichtung entsprechend der Schnittverlaufslinie XII - XII in Fig. 7,
- Fig. 13: die stirnseitige Ansicht der Auslaufseite der Vorrichtung entsprechend Fig. 6, jedoch bei abgenommenem Klemmring,
- Fig. 14: die Draufsicht auf die Lagerzapfenseite des kugelförmigen Verschlussstücks,
- Fig. 15: das äußere Gehäuseteil in Blickrichtung auf seine Innenseite,
- Fig. 16: den Längsschnitt durch das äußere Gehäuseteil entsprechend der Schnittverlaufslinie XVI - XVI in Fig. 15,
- Fig. 17 - 19: die Vorrichtung entsprechend den Fig. 1 - 3, jedoch bei einer anderen Ausführungsform des Schlauchanschlusses an das schlauchseitige Gehäuseteil, wobei Fig. 18. den Längsschnitt durch die Vorrichtung entsprechend der Schnittverlaufslinie XVIII - XVIII in Fig. 17 zeigt, und
- Fig. 20 bis 22: die Vorrichtung entsprechend den Fig. 4 - 6, jedoch mit der Ausführungsform des Schlauchanschlusses gemäß Fig. 17 - 19, wobei Fig. 21 den Längsschnitt durch die Vorrichtung entsprechend der Schnittverlaufslinie XXI - XXI in Fig. 20 zeigt.

### DETAILLIERTE BESCHREIBUNG DER AUSFÜHRUNGSBEISPIELE

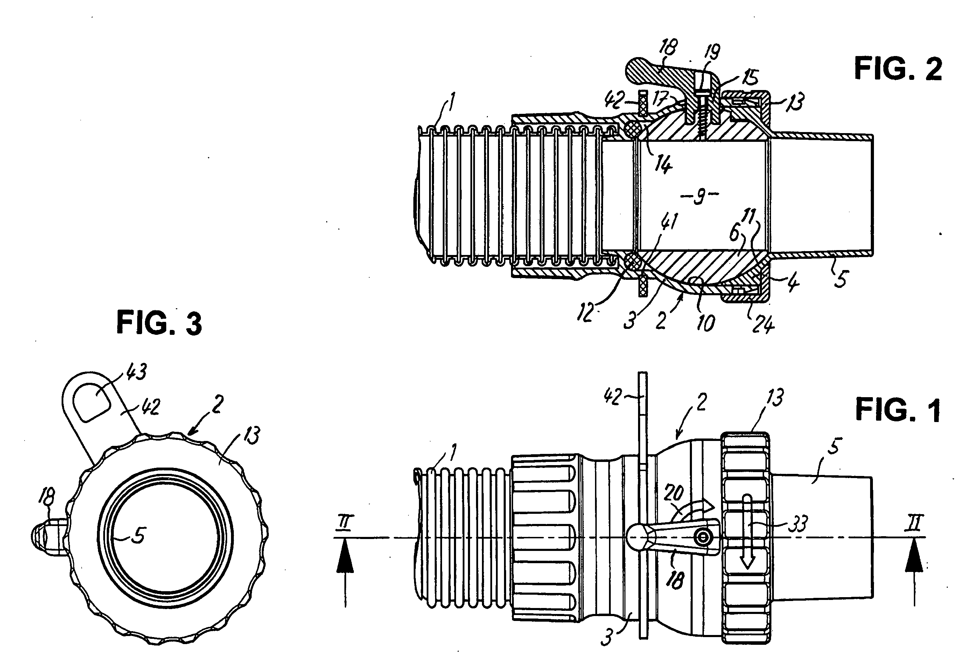

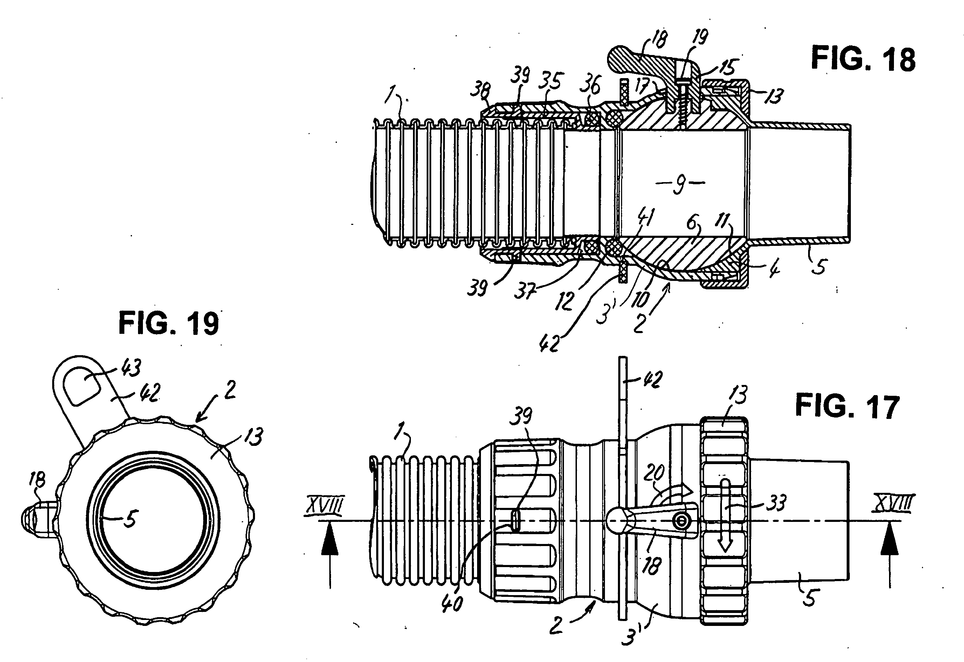

Die in den Fig. 1 - 16 einerseits und Fig. 17 - 22 andererseits dargestellten Vorrichtungen unterscheiden sich lediglich hinsichtlich des Anschlusses des Schlauchs 1 an das Gehäuse 2, sind aber im Übrigen übereinstimmend ausgebildet, sodass die nachfolgende Beschreibung im Wesentlichen für beide Ausführungsformen zutreffend ist.

Das Gehäuse 2 ist zweiteilig ausgebildet und besteht aus einem schlauchseitigen Gehäuseteil 3 und einem äußeren Gehäuseteil 4, das mit einer Auslauftülle 5 versehen ist. Die Auslauftülle 5 ist vorzugsweise so geformt und bemessen, dass sie in ein Auslaufrohr eingeschoben werden kann. Die Gehäuseteile 3 und 4 sind aus geeigneten thermoplastischen Kunststoffen geformt. So kann das schlauchseitige Gehäuseteil 3 aus Polypropylen hergestellt sein, während das äußere Gehäuseteil 4 mit der Auslauftülle 5 aus einem weicheren Werkstoff hergestellt sein kann, wie beispielsweise aus einem thermoplastischen Elastomer auf Polyurethanbasis.

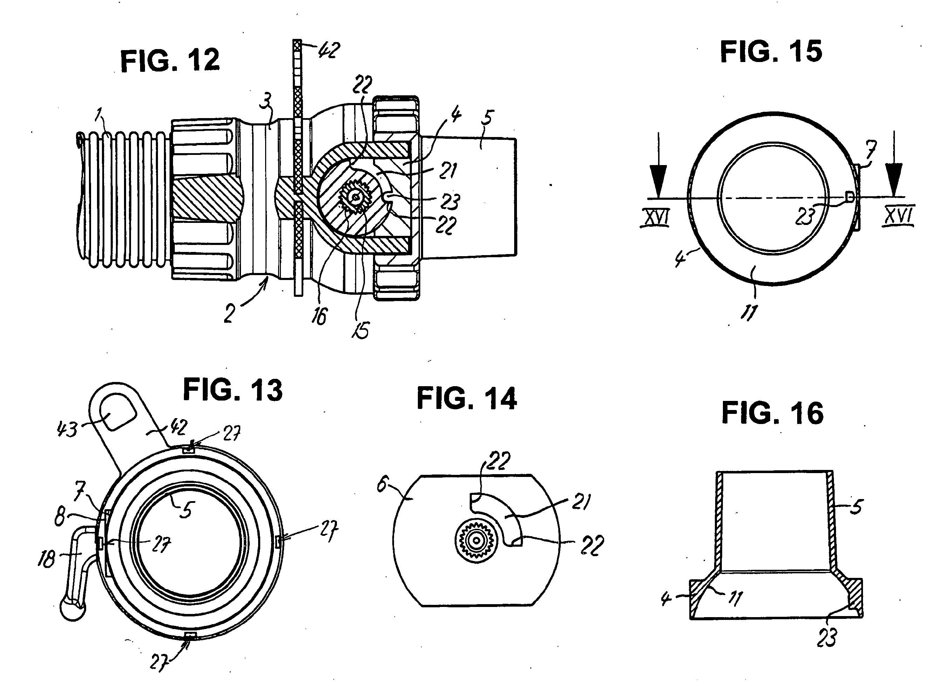

Das äußere Gehäuseteil 4 greift in das schlauchseitige Gehäuseteil 3 ein, wie beispielsweise in Fig. 2 dargestellt ist. Dabei kann am Umfang des äußeren Gehäuseteils 4 ein Vorsprung 7 od. dgl. angeformt sein, der in eine entsprechende Ausnehmung 8 des schlauchseitigen Gehäuseteils eingreift, wie in den Fig. 13 und 15 dargestellt ist, um die beiden Gehäuseteile 3 und 4 verdrehsicher und positionsgenau miteinander zu verbinden.

Das innerhalb des Gehäuses 2 drehbar angeordnete kugelförmige Verschlussstück 6 ist mit einem geradlinigen mit dem Schlauch 1 und der Auslauftülle 5 zur Freigabe des Ausflussendes ausfluchtbaren Durchgangskanal 9 versehen. Dem kugelförmigen Verschlussstück 6 sind in beiden Gehäuseteilen 3 und 4 vorgesehene konkav gewölbte Kugelabschnittsflächen 10 bzw. 11 komplementär zugeordnet.

Im schlauchseitigen Gehäuseteil 3 ist ein dem Verschlussstück 6 anliegender Dichtring 12 vorgesehen, dem das Verschlussstück 6 mittels eines das äußere Gehäuseteil 4 umgebenden und mit dem schlauchseitigen Gehäuseteil 3 auf noch zu beschreibende Weise verriegelbaren Klemmrings 13 abdichtend anpressbar ist.

Der Dichtring 12 ist vorzugsweise ein O-Ring, der in eine zum Verschlussstück 6 offene Ringnut 14 des schlauchseitigen Gehäuseteils 3 eingelegt ist, wie beispielsweise aus Fig. 2 hervorgeht.

Konzentrisch mit der Drehachse des kugelförmigen Verschlussstücks 6 ist ein Lagerzapfen 15 an dem Verschlussstück 6 befestigt. Hierzu greift der Lagerzapfen 15 in eine entsprechende Ausnehmung im Verschlussstück 6 verdrehsicher mit einer Kerbverzahnung 16 ein, wie in Fig. 12 dargestellt ist. Der Lagerzapfen 15 ist durch eine Lagerbohrung 17 des schlauchseitigen Gehäuseteils 3 nach außen geführt und trägt an seinem äußeren Ende einen Bedienungsgriff 18. Eine konzentrisch durch den Lagerzapfen 15 geführte Schraube 19 sorgt für eine Befestigung des Lagerzapfens 15 und damit des Bedienungsgriffs 18 an dem kugelförmigen Verschlussstück 6.

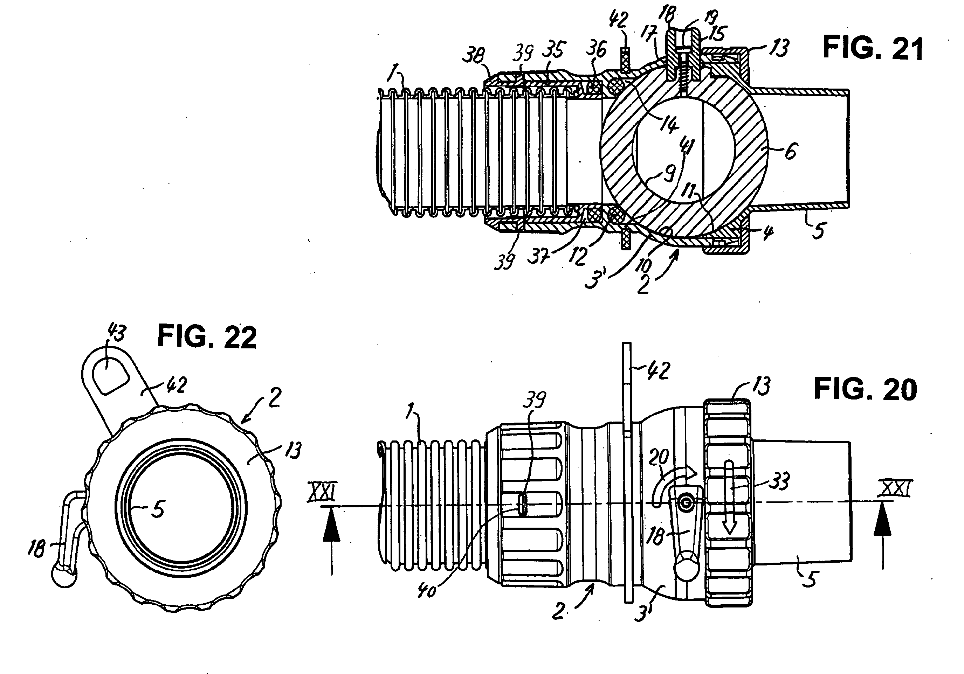

Der Lagerzapfen 15 mit dem Bedienungsgriff 18 ist so an dem Verschlussstück 6 befestigt, dass bei der beispielsweise in den Fig. 1 und 2 dargestellten Offenstellung des Verschlussstücks der Bedienungsgriff 18 parallel zur Mittelachse des Gehäuses 2 ausgerichtet ist, sodass von außen die Offenstellung des Kugelhahns sichtbar ist. Wird dagegen das Verschlussstück durch den Bedienungsgriff 18 in Richtung des in Fig. 1 angegebenen Pfeils 20 verschwenkt so wird der Kugelhahn geschlossen und der Bedienungsgriff 18 nimmt die in Fig. 20 gezeigte Stellung quer zur Mittelachse des Gehäuses ein.

Die beiden möglichen Grenzlagen des kugelförmigen Verschlussstücks 6 sind durch Anschläge markiert, sodass die Schließstellung und die Öffnungsstellung des Kugelhahns jederzeit sicher eingestellt werden kann. Zu diesem Zweck befindet sich konzentrisch mit der Drehachse des Verschlussstücks und quer dazu eine Ausnehmung 21 am Außenumfang des Verschlussstücks 6, wie am Besten aus Fig. 12 in Verbindung mit Fig. 14 hervorgeht. Die Ausnehmung 21 ist durch zwei den Drehwinkel des Verschlussstücks 6 bestimmende Anschlagflächen 22 begrenzt, denen ein an dem äußeren Gehäuseteil 4 angebrachter Anschlagvorsprung 23 zugeordnet ist.

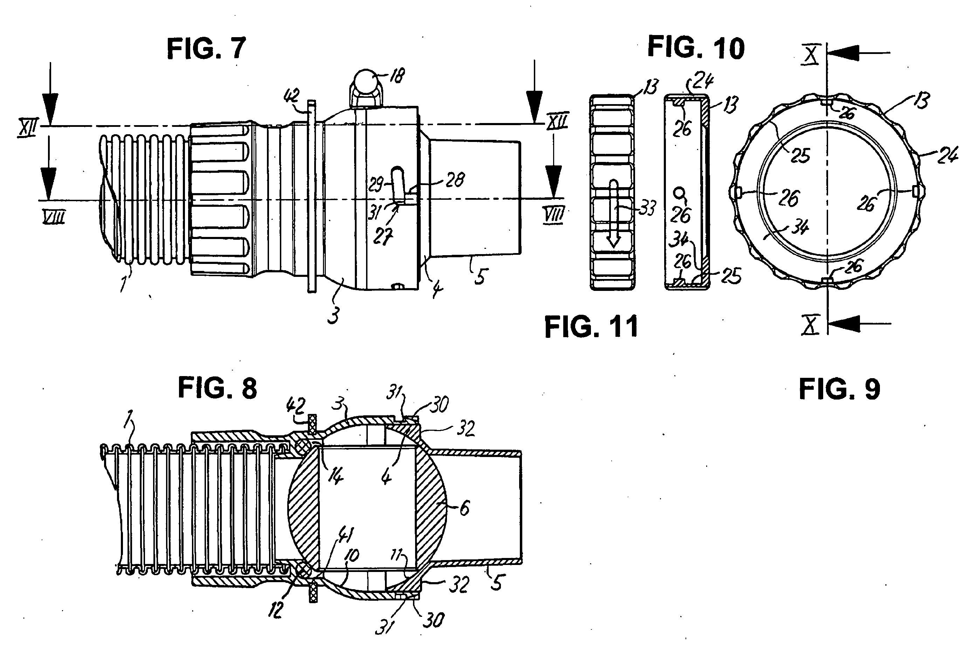

Der Klemmring 13 übergreift das schlauchseitige Gehäuseteil 3 mit einem Rand 24, an dessen Innenumfangsfläche 25 mehrere am Umfang gleichmäßig verteilte nach innen vorstehende Verriegelungsvorsprünge 26 vorgesehen sind. Im gezeigten Beispiel sind vier Verriegelungsvorsprünge 26 vorhanden. Den Verriegelungsvorsprüngen 26 sind am Außenumfang des schlauchseitigen Gehäuseteils 3 eingeformte Verriegelungsausnehmungen 27 komplementär zugeordnet. Die Verriegelungsvorsprünge 26 wirken mit den Verriegelungsausnehmungen 27 nach Art einer Bajonettverriegelungsanordnung zusammen. Während die Verriegelungsvorsprünge 26 am Besten aus den Fig. 9 und 10 hervorgehen zeigen die Fig. 7 und 8 die Anordnung und Ausbildung der Verriegelungsausnehmungen 27.

Bezüglich der Anordnung und Ausbildung der Verriegelungsausnehmungen 27 wird nunmehr auf die Fig. 7 und 8 Bezug genommen. Wie daraus hervorgeht sind die Verriegelungsausnehmungen 27 jeweils aus einem parallel zur Mittelachse des Gehäuses 2 angeordneten äußeren Nutabschnitt 28 und einem daran anschließenden und quer dazu angeordneten inneren Nutabschnitt 29 gebildet. Der Nutgrund 30 des äußeren Nutabschnitts 28 ist von außen nach innen ansteigend angeordnet, wie aus Fig. 8 hervorgeht. Innen endet der Nutabschnitt 30 mit einer Raststufe 31 für den zugeordneten Verriegelungsvorsprung 26. Wird der Klemmring 13 von außen auf das schlauchseitige Gehäuseteil aufgeschoben, wobei die Verriegelungsvorsprünge 26 in die äußeren Nutabschnitte der Verriegelungsausnehmungen 27 eingreifen, so gleiten die Verriegelungsvorsprünge 26 auf den nach innen ansteigenden Nutgründen 30, wobei der Rand 24 des Klemmrings 13 elastisch verformt wird, bis die Verriegelungsvorsprünge 26 hinter den Raststufen 31 einrasten.

Wird jetzt der Klemmring 13 entgegen der Richtung des Pfeils 33 gedreht so bewegen sich die Verriegelungsvorsprünge 26 in den inneren Nutabschnitten 29, welche in Drehrichtung ansteigend angeordnet sind. Es kommt daher zu einer Andrückung der Andruckfläche 34 des Klemmrings 13 an die Ringfläche 32 (Fig. 8) des äußeren Gehäuseteils 4, welches mit seiner Kugelabschnittsfläche 11 an das kugelförmige Verschlussstück 6 angedrückt wird, das seinerseits an den Dichtring 12 abdichtend angepresst wird, wodurch das kugelförmige Verschlussstück 6 in seiner eingestellten Position fixiert wird.

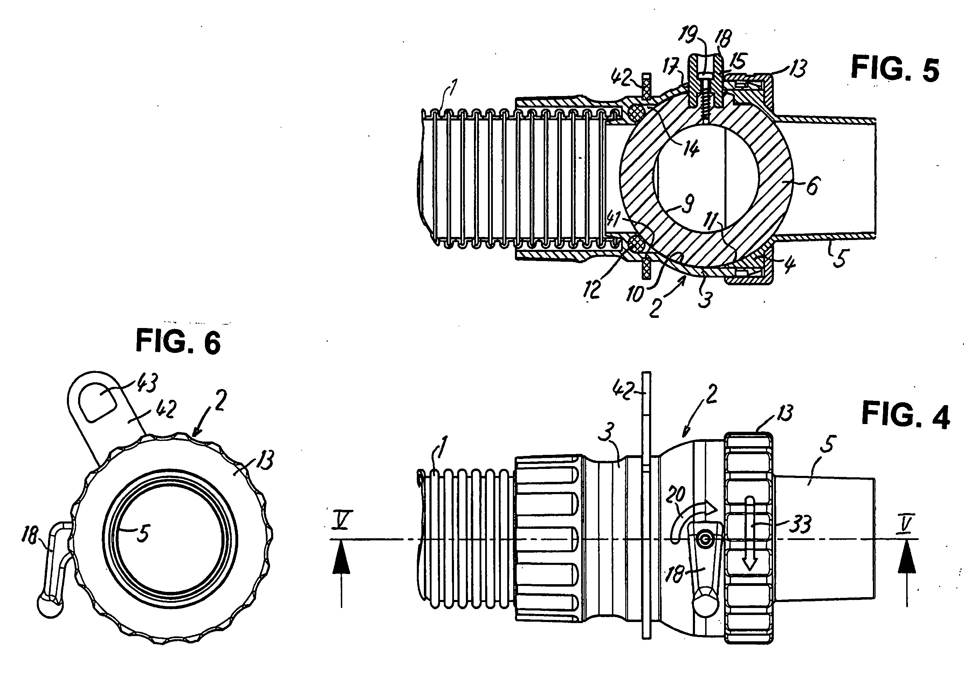

Zur Lösung der Anpressung wird der Klemmring 13 in Richtung des Pfeils 33 gedreht, wie das in den Fig. 4, 11, 17 und 20 angegeben ist. Nach Aufhebung der Anpressung lässt sich der Bedienungsgriff 18 in die gewünschte Lage verschwenken.

Bei der ersten Ausführungsform der Vorrichtung ist der Schlauch 1 innerhalb des schlauchseitigen Gehäuseteils 3 in der in den Fig. 2, 5 und 8 gezeigten Position eingeklebt, d.h. ist nicht lös- und drehbar mit der Vorrichtung verbunden. Bei der zweiten Ausführungsform der Vorrichtung ist der Schlauch 1 dagegen dreh- und lösbar mit dem schlauchseitigen Gehäuseteil 3' verbunden, wie in den Fig. 18 und 21 dargestellt ist. Hierbei ist das Schlauchende in eine Endhülse 35 eingeklebt, die durch einen O-Ring 36 abgedichtet und drehbar in eine Zylinderausnehmung 37 des schlauchseitigen Gehäuseteils 3' eingesetzt ist. Die Endhülse 35 wird in der Zylinderausnehmung 37 durch einen Sperrring 38 gehalten, der mit dem schlauchseitigen Gehäuseteil 3' lösbar verrastet ist und daher auch "Klickring" genannt wird. Zur Verrastung des Sperrrings 38 sind im gezeigten Ausführungsbeispiel zwei diametral gegenüberliegende Rastvorsprünge 39 am Sperrring 38 vorgesehen, die in entsprechende Rastausnehmungen 40 in der Wandung des schlauchseitigen Gehäuseteils 3' eingerastet sind. Die Rastvorsprünge 39 können von außen nach innen gegen den elastischen Widerstand des Schlauchs 1 verlagert werden, bis sie aus den Rastausnehmungen 40 austreten, worauf der Sperrring 38 aus der Zylinderausnehmung 37 herausgezogen werden kann. Nunmehr kann auch der.Schlauch mit der Endhülse 35 aus der Zylinderausnehmung 37 herausgezogen werden, wodurch die Vorrichtung vom Schlauch getrennt ist.

Am Außenumfang des schlauchseitigen Gehäuseteils 3 bzw. 3' ist eine Umfangsnut 41 vorgesehen, in welche ein Einhängeelement 42 dreh- und lösbar eingerastet ist. Hierbei ist der Innendurchmesser des Einhängeelements 42 etwas kleiner als der Umfang des schlauchseitigen Gehäuseteils 3 bzw. 3' um die Verrastungsbefestigung des Einhängeelements 42 am Gehäuseteil 3 bzw. 3' zu ermöglichen. Diese Anordnung ist aus den Fig. 2, 5, 18 und 21 ersichtlich.

Das Einhängeelement 42 besitzt im Wesentlichen die Form einer radial abstehenden Zunge, die an ihrem Ende mit einem Loch 43 versehen ist, welches der Anhängung der Vorrichtung mit dem daran angebrachten Schlauch 1 an der Bodenreinigungsmaschine dient.

### BEZUGSZAHLENLISTE

- 1: Schlauch
- 2: Gehäuse
- 3, 3': schlauchseitiges Gehäuseteil
- 4: äußeres Gehäuseteil
- 5: Auslauftülle
- 6: kugelförmiges Verschlussstück
- 7: Vorsprung
- 8: Ausnehmung
- 9: Durchgangskanal
- 10: Kugelabschnittsfläche
- 11: Kugelabschnittsfläche
- 12: Dichtring
- 13: Klemmring
- 14: Ringnut
- 15: Lagerzapfen
- 16: Kerbverzahnung
- 17: Lagerbohrung
- 18: Bedienungsgriff
- 19: Schraube
- 20: Pfeil
- 21: Ausnehmung
- 22: Anschlagflächen
- 23: Anschlagvorsprung
- 24: Rand
- 25: Innenumfangsfläche
- 26: Verriegelungsvorsprünge
- 27: Verriegelungsausnehmungen
- 28: äußerer Nutabschnitt
- 29: innerer Nutabschnitt
- 30: Nutgrund
- 31: Raststufe
- 32: Ringfläche
- 33: Pfeil
- 34: Andruckfläche
- 35: Endhülse
- 36: O-Ring
- 37: Zylinderausnehmung
- 38: Sperrring
- 39: Rastvorsprünge
- 40: Rastausnehmungen
- 41: Umfangsnut
- 42: Einhängeelement
- 43: Loch

## Patentansprüche

1. Vorrichtung zum wahlweisen Absperren oder Freigeben des Ausflussendes eines Schlauchs (1), insbesondere des Abwasserschlauchs einer Bodenreinigungsmaschine, mit einem zweiteiligen Gehäuse (2), dessen schlauchseitiges Gehäuseteil (3, 3') für den Anschluss des Schlauchs (1) ausgebildet und dessen äußeres Gehäuseteil (4) mit einer Auslauftülle (5) versehen ist, wobei innerhalb des Gehäuses (2) ein um 90° drehbares kugelförmiges Verschlussstück (6) angeordnet ist, das mit einem geradlinigen mit dem Schlauch (1) und der Auslauftülle (5) zur Freigabe des Ausflussendes ausfluchtbaren Durchgangskanal (9) versehen ist, **dadurch gekennzeichnet, dass** in beiden Gehäuseteilen (3, 3', 4) vorgesehene konkav gewölbte Kugelabschnittsflächen (10, 11) dem Verschlussstück (6) komplementär zugeordnet sind, wobei im schlauchseitigen Gehäuseteil (3, 3') ein an dem Verschlussstück (6) anliegender Dichtring (12) vorgesehen ist, an dem das Verschlussstück (6) mittels eines des äußere Gehäuseteil (4) umgebenden und mit dem schlauchseitigen Gehäuseteil (3, 3') verriegelbaren Klemmrings (13) abdichtend und die Position des Verschlussstücks (6) fixierend anpressbar ist.

2. Vorrichtung nach Anspruch 1, **dadurch gekennzeichnet, dass** der Dichtring (12) ein O-Ring ist, der in eine zum Verschlussstück (6) offene Ringnut (14) des schlauchseitigen Gehäuseteils (3, 3') eingelegt ist, die konzentrisch mit der Mittelachse des Gehäuses (2) angeordnet ist.

3. Vorrichtung nach Anspruch 1 oder 2, **dadurch gekennzeichnet, dass** konzentrisch mit der Drehachse des Verschlussstücks (6) ein Lagerzapfen (15) an dem Verschlussstück (6) befestigt ist, der durch eine Lagerbohrung (17) des schlauchseitigen Gehäuseteils (3, 3') nach außen geführt und an dessem äußeren Ende ein Bedienungsgriff (18) befestigt ist.

4. Vorrichtung nach einem oder mehreren der vorangehenden Ansprüche, **dadurch gekennzeichnet, dass** konzentrisch mit der Drehachse des Verschlussstücks (6) und quer dazu eine Ausnehmung (21) am Außenumfang des Verschlussstücks (6) vorgesehen ist, die durch zwei den Drehwinkel des Verschlussstücks (6) bestimmende Anschlagflächen (22) begrenzt ist, denen ein an dem äußeren Gehäuseteil (4) angebrachter Anschlagvorsprung (23) zugeordnet ist.

5. Vorrichtung nach einem oder mehreren der vorangehenden Ansprüche, **dadurch gekennzeichnet, dass** der Klemmring (13) das schlauchseitige Gehäuseteil (3, 3') mit einem Rand (24) übergreift, an dessen Innenumfangsfläche (25) mehrere am Umfang gleichmäßig verteilte nach innen vorstehende Verriegelungsvorsprünge (26) vorgesehen sind, denen am Außenumfang des schlauchseitigen Gehäuseteils (3, 3') eingeformte Verriegelungsausnehmungen (27) nach Art einer Bajonettverriegelungsanordnung komplementär zugeordnet sind.

6. Vorrichtung nach Anspruch 5, **dadurch gekennzeichnet, dass** die Verriegelungsausnehmungen (27) jeweils aus einem parallel zur Mittelachse des Gehäuses (2) angeordneten äußeren Nutabschnitt (28) und einem daran anschließenden und quer dazu angeordneten inneren Nutabschnitt (29) gebildet sind, wobei der Nutgrund (30) des äußeren Nutabschnitts (28) von außen nach innen ansteigend ist und mit einer Raststufe (31) für den zugeordneten Verriegelungsvorsprung (26) endet.

7. Vorrichtung nach Anspruch 5, **dadurch gekennzeichnet, dass** vier Verriegelungsvorsprünge (26) und dementsprechend vier Verriegelungsausnehmungen (27) vorgesehen sind.

8. Vorrichtung nach einem oder mehreren der vorangehenden Ansprüche, **dadurch gekennzeichnet, dass** der Schlauch (1) dreh- und lösbar mit dem schlauchseitigen Gehäuseteil (3') verbunden ist.

9. Vorrichtung nach Anspruch 8, **dadurch gekennzeichnet, dass** das Schlauchende in eine Endhülse (35) eingeklebt ist, die abgedichtet und drehbar in eine Zylinderausnehmung (37) des schlauchseitigen Gehäuseteils (3') eingesetzt und darin durch einen Sperrring (38) gehalten ist, der mit dem schlauchseitigen Gehäuseteil lösbar verrastet ist.

10. Vorrichtung nach einem oder mehreren der vorangehenden Ansprüche, **dadurch gekennzeichnet, dass** am Außenumfang des schlauchseitigen Gehäuseteils (3, 3') eine Umfangsnut (41) vorgesehen ist, in welche ein Einhängeelement (42) dreh- und lösbar eingerastet ist.

## Claims

1. Device for selectively blocking or freeing of the outflow end of a hose (1), particularly the waste water hose of a floor cleaning machine, with a two-part housing (2), the housing part (3, 3') at the hose side of which is constructed for connection of the hose (1) and the outer housing (4) of which is provided with an outlet spout (5), wherein arranged within the housing (2) is a spherical closure member (6), which is rotatable through 90° and which is provided with a rectilinear passage channel (9) alignable with the hose (1) and the outlet spout (5) for freeing the outflow end, **characterized in that** concavely curved part-spherical surfaces (10, 11) provided in the two housing parts (3, 3', 4) have complementary association with the closure member (6), wherein provided in the housing part (3, 3') at the hose side is a sealing ring (12), which bears against the closure member (6) and against which the closure member (6) can be sealingly pressed, with fixing of the position of the closure member (6), by means of a clamping ring (13) surrounding the outer housing part (4) and lockable with the housing part (3, 3') at the hose side.

2. Device according to claim 1, **characterized in that** the sealing ring (12) is an O-ring which is placed in an annular groove (14) of the housing part (3, 3') at the hose side, said groove being open towards the closure member (6) and arranged to be concentric with the center axis of the housing (2).

3. Device according to claim 1 or 2, **characterized in that** a bearing pin (15) is fastened to the closure member (6) concentrically with the axis of rotation of the closure member (6) and is led outwardly through a bearing bore (17) of the housing part (3, 3') at the hose side, an operating handle (18) being fastened to the outer end of the bearing pin.

4. Device according to one or more of the preceding claims, **characterized in that** provided at the outer circumference of the closure member (6) concentrically with the axis of rotation of the closure member (6) and transversely thereto is a recess (21) that is bounded by two abutment surfaces (22), which determine the angle of rotation of the closure member (6) and with which an abutment projection (23) mounted on the outer housing part (4) is associated.

5. Device according to one or more of the preceding claims, **characterized in that** the clamping ring (13) engages over the housing part (3, 3') at the hose side by an edge (24), at the inner circumferential surface (25) of which are provided in uniform distribution at the circumference several inwardly protruding locking projections (26) with which locking recesses (27) formed at the outer circumference of the housing part (3, 3') at the hose side are in complementary association in the manner of a bayonet locking arrangement.

6. Device according to claim 5, **characterized in that** the locking recesses (27) are each formed from an outer groove section (28), which is arranged parallel to the center axis of the housing (2), and an inner groove section (29), which is connected therewith and arranged transversely thereto, wherein the groove base (30) of the outer groove section (28) rises from the outside towards the inside and ends with a detent step (31) for the associated locking projection (26).

7. Device according to claim 5, **characterized in that** four locking projections (26) and correspondingly four locking recesses (27) are provided.

8. Device according to one or more of the preceding claims, **characterized in that** the hose (1) is rotatably and detachably connected with the housing part (3') at the hose side.

9. Device according to claim 8, **characterized in that** the hose end is glued in an end sleeve (35), which is sealably and rotatably inserted into a cylinder recess (37) of the housing part (3') at the hose side and held therein by a locking ring (38) detachably detented with the housing part at the hose side.

10. Device according to one or more of the preceding claims, **characterized in that** provided at the outer circumference of the housing part (3, 3') at the hose side is a circumferential groove (41) in which a suspension element (42) is rotatably and detachably detented.

## Revendications

1. Dispositif pour obturer ou ouvrir sélectivement l'extrémité d'écoulement d'un tuyau flexible (1), notamment du tuyau d'eaux usées d'une machine de nettoyage de sols, comprenant un boitier (2) en deux parties, dont la partie de boitier (3, 3') côté tuyau, est configurée pour le raccordement du tuyau (1) et dont la partie de boitier extérieure (4) est munie d'un embout verseur d'écoulement (5), une pièce d'obturation sphérique (6), que l'on peut faire tourner de 90°, étant agencée à l'intérieur du boitier (2) et pourvue d'un canal de passage (9) rectiligne, susceptible d'être aligné avec le tuyau (1) et l'embout verseur d'écoulement (5) pour ouvrir l'extrémité d'écoulement, **caractérisé en ce que** des secteurs de surface sphérique (10, 11) à courbure concave prévus dans les deux parties de boitier (3, 3', 4) sont associés de manière complémentaire à la pièce d'obturation (6), et dans la partie de boitier (3, 3') côté tuyau, il est prévu une bague d'étanchéité (12) s'appliquant contre la pièce d'obturation (6), et contre laquelle la pièce d'obturation (6) peut être pressée de manière étanche et de façon à fixer la position de ladite pièce d'obturation (6), au moyen d'un anneau de serrage (13), qui entoure la partie de boitier extérieure (4) et peut être verrouillé avec la partie de boitier (3, 3') côté tuyau.

2. Dispositif selon la revendication 1, **caractérisé en ce que** la bague d'étanchéité (12) est un joint torique, qui est placé dans une rainure annulaire (14) de la partie de boitier (3, 3') côté tuyau, ladite rainure annulaire étant ouverte vers la pièce d'obturation (6) et agencée de manière concentrique à l'axe central du boitier (2).

3. Dispositif selon la revendication 1 ou la revendication 2, **caractérisé en ce qu'**un tourillon de palier (15) est fixé sur la pièce d'obturation (6) de manière concentrique à l'axe de rotation de la pièce d'obturation (6), et est mené et guidé vers l'extérieur à travers un alésage de palier (17) de la partie de boitier (3, 3') côté tuyau, une poignée de manoeuvre (18) étant fixée à l'extrémité extérieure dudit tourillon de palier.

4. Dispositif selon l'une ou plusieurs des revendications précédentes, **caractérisé en ce que** de manière concentrique à l'axe de rotation de la pièce d'obturation (6) et transversalement à celui-ci, il est prévu sur la périphérie extérieure de la pièce d'obturation (6), un évidement (21) qui est délimité par deux surfaces de butée (22), qui définissent l'angle de rotation de la pièce d'obturation (6) et auxquelles est associée une protubérance de butée (23) placée sur la partie de boitier extérieure (4).

5. Dispositif selon l'une ou plusieurs des revendications précédentes, **caractérisé en ce que** l'anneau de serrage (13) surmonte la partie de boitier (3, 3') côté tuyau, par une bordure (24), sur la surface périphérique intérieure (25) de laquelle sont prévues plusieurs protubérances de verrouillage (26) faisant saillie vers l'intérieur et auxquelles sont associés de façon complémentaire, à la manière d'un agencement de verrouillage à baïonnette, des évidements de verrouillage (27) formés sur la périphérie extérieure de la partie de boitier (3, 3') côté tuyau.

6. Dispositif selon la revendication 5, **caractérisé en ce que** les évidements de verrouillage (27) sont formés chacun par un tronçon de rainure extérieur (28) parallèle à l'axe central du boitier (2), et un tronçon de rainure intérieur (29), qui se raccorde au précédent tout en étant agencé transversalement à celui-ci, le fond de rainure (30) du tronçon de rainure extérieur (28) présentant une pente montante de l'extérieur vers l'intérieur et se terminant par un gradin d'encliquetage (31) pour la protubérance de verrouillage (26) associée.

7. Dispositif selon la revendication 5, **caractérisé en ce que** sont prévus quatre protubérances de verrouillage (26) et, en conséquence, quatre évidements de verrouillage (27) correspondants.

8. Dispositif selon l'une ou plusieurs des revendications précédentes, **caractérisé en ce que** le tuyau (1) est relié de manière rotative et amovible à la partie de boitier (3') côté tuyau.

9. Dispositif selon la revendication 8, **caractérisé en ce que** l'extrémité de tuyau est collée dans une douille d'extrémité (35), qui est insérée, de manière étanche et rotative, dans un évidement cylindrique (37) de la partie de boitier (3') côté tuyau, en y étant maintenue par une bague d'arrêt (38) encliquetée de manière amovible dans la partie de boitier côté tuyau.

10. Dispositif selon l'une ou plusieurs des revendications précédentes, **caractérisé en ce que** sur la périphérie extérieure de la partie de boitier (3, 3') côté tuyau, il est prévu une rainure périphérique (41) dans laquelle est enclenché, de manière rotative et amovible, un élément d'accrochage (42).
